Europäisches Patentamt

(19) European Patent Office

Office européen des brevets

(11) EP 0 919 463 A1

(12) EUROPEAN PATENT APPLICATION

(43) Date of publication:
02.06.1999 Bulletin 1999/22

(51) Int. Cl.⁶: **B64G 1/24**, B64G 1/44

(21) Application number: 97309482.4

(22) Date of filing: 25.11.1997

(84) Designated Contracting States:
AT BE CH DE DK ES FI FR GB GR IE IT LI LU MC NL PT SE
Designated Extension States:
AL LT LV MK RO SI

(71) Applicant: ICO Services Ltd.
Hammersmith, London W6 9BN (GB)

(72) Inventor: Lokman, Latif
Wimbledon, SW19 7QZ (GB)

(74) Representative:
Read, Matthew Charles et al
Venner Shipley & Co.
20 Little Britain
London EC1A 7DH (GB)

(54) **Spacecraft attitude control**

(57) A satellite having an attitude control system which includes one or more liquid crystal display panels (8, 9, 18) mounted to solar panels (4, 5) on the satellite, or directly or on booms (19) to the body (3) of the satellite. The display panels (8, 9, 18) are divided into segments (13a - d) and have a selectively variable reflectivity to incoming solar radiation, in that the amount of solar radiation which is reflected by a panel, and thus the torque imparted to the satellite body, can be controlled by varying the darkness of the display, without the need to move the display panel (8, 9, 18) relative to the incident radiation.

Figure 4

EP 0 919 463 A1

## Description

This invention relates to attitude control in spacecraft, more particularly, but not exclusively to a spacecraft having attitude control means and a method of controlling spacecraft attitude.

The majority of spacecraft, including inter-planetary and extra-solar system probes as well as earth-orbiting satellites (including geostationary satellites), require some form of attitude control to ensure that equipment on the spacecraft is correctly oriented to perform its desired function, for example, maintaining communications with the Earth or carrying out measurements and observations on distant objects in space.

In the case of an earth-orbiting satellite, such as a communications satellite, the attitude of the satellite 15 controlled so as to achieve accurate pointing of antennas and sensors. Similarly, optimal power output from a satellite's solar panels is achieved by keeping those panels pointing at the sun.

An orbiting satellite is subject to a number of influences which may cause it to deviate from its intended attitude. These influences include variations in the gravitational pull on the satellite as well as the effect of photons of light energy from the sun striking the satellite. This latter effect is known as solar radiation pressure or simply solar pressure, and causes disturbance torques which tend to alter satellite attitude. The principle that streams of particles from the sun striking a surface generate a force on that surface, depending on its surface area, its angle of inclination towards the sun, its reflectivity and the intensity of the solar radiation, is well known.

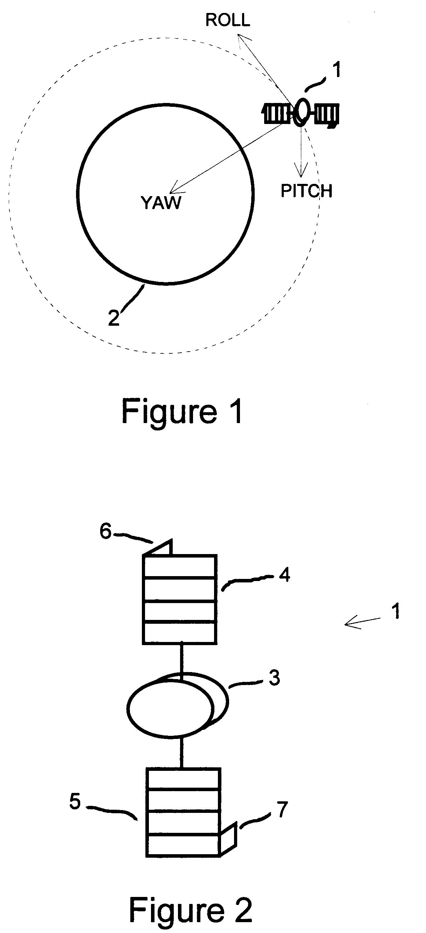

Two main types of satellite design are known: spin stabilised and 3-axis stabilised satellites. In a spin stabilised satellite, at least part of the satellite body itself spins, thus producing forces which tend to resist any changes in satellite attitude. However, solar pressure still produces disturbance torques which cause the spin axis to deviate from its nominal attitude. The disturbance torques caused by solar pressure increase with the increase in offset between the centre of solar pressure and the centre of satellite mass. A 3-axis stabilised satellite 1 is shown in Figure 1, in orbit around the Earth 2, the axes referred to being the roll, pitch and yaw axes. In a 3-axis stabilised satellite, the body of the satellite does not spin axially and stabilisation is maintained by momentum wheels spinning within the satellite body.

In the course of satellite design, solar pressure may be compensated for by ensuring that, in the satellite's normal attitude, solar pressure torques will be evenly balanced. For example, in a 3-axis stabilised satellite with extended solar panels, significant forces due to solar pressure will be present at the substantial surface area presented by the solar panels, which may be minimised by symmetrically disposing the panels about the satellite's centre of mass.

Beyond the design stage, a number of dynamic techniques exist to compensate for the various influences to which a satellite is subject. A change in satellite attitude may be detected by a variety of known attitude sensors, including earth sensors, ground beacon sensors, sun sensors and star sensors. It is known to use the outputs of these sensors to control satellite attitude using various forms of propulsion system, such as thrusters and ion engines, as well as techniques such as momentum wheels, reaction wheels and control moment gyros. For further background information, reference is directed to US-A-5 337 981, "Method and Apparatus for Compensating for Solar Torque Transients on a Satellite during a Solar Eclipse".

Another known technique for achieving attitude control makes constructive use of the solar pressure phenomenon. This is generally known as solar sailing attitude control. A description of the principles behind this method may be found in "Space Craft Dynamics and Control, a Practical Engineering Approach", Marcel J. Sidi, Cambridge Aerospace Series, Chapter 8.6 and Appendix C3 (Attitude Control with Solar Torques). The basic concept may be understood by reference to Figure 2, which shows a conventional satellite 1 comprising a body 3 with solar panels 4, 5 disposed symmetrically about the body 3. Mechanically moveable flaps 6, 7 are installed along a part of one side of each of the solar panels 4, 5. The flaps 6, 7 are activated by the satellite's attitude control systems (not shown) to expose differing amounts of surface area to the sun. The action of photons on the flaps 6, 7 causes a solar pressure on them, which generates an unbalanced torque in a desired direction. The positioning of the flaps 6, 7 at the sides of the panels 4, 5 permits control of roll, pitch and yaw simultaneously. The problems with this technique include the power consumption of the actuating motors, the speed of response of the flaps and the difficulty of accurate positioning and control of a mechanical flap device.

To overcome at least some of the above problems, the present invention provides a spacecraft having attitude control means comprising means for receiving solar radiation, the radiation receiving means having a selectively variable reflectivity to incident radiation.

The radiation receiving means may comprise an electro-optical device, such as a liquid crystal display (LCD), which may be arranged to present a darker or brighter surface to incident solar radiation by the application of control voltages.

The liquid crystal display may be mounted to a solar panel or to a projection from the satellite body.

The radiation receiving means may further comprise two LCD panels each mounted to the ends of the solar panels furthest from the satellite body.

A screen area of the display may be divided into a number of segments, the reflectivity of which may be individually controllable.

A temperature control system for the LCD panels may be provided to enable them to function in a wide variety of temperature environments.

The ability to achieve attitude control by varying the reflectivity of a surface exposed to solar radiation, rather than by moving a fixed reflectivity surface, allows the elimination of a mechanical actuation system and can lead to improvements in attitude alignment accuracy and speed of response.

Embodiments of the invention will now be described with reference to the accompanying drawings, in which:

Figure 1 is a diagrammatic view of a conventional satellite orbiting the earth;
Figure 2 is a more detailed view of the satellite of Figure 1, showing the mechanical flaps installed at the edges of the solar panels;
Figure 3 is a diagrammatic view of a first embodiment of the invention, in which LCD panels are disposed at each of the ends of the solar panels;
Figure 4 illustrates the construction of an LCD panel for use in the invention;
Figure 5 is a diagrammatic view of a second embodiment of the invention in which the LCD panel is mounted on a boom projecting from the satellite body;
Figure 6 is a diagrammatic view of a spin-stabilised satellite to which LCD panels according to the invention are mounted; and
Figure 7 is a block diagram showing the control circuitry for the attitude control system according to the present invention.

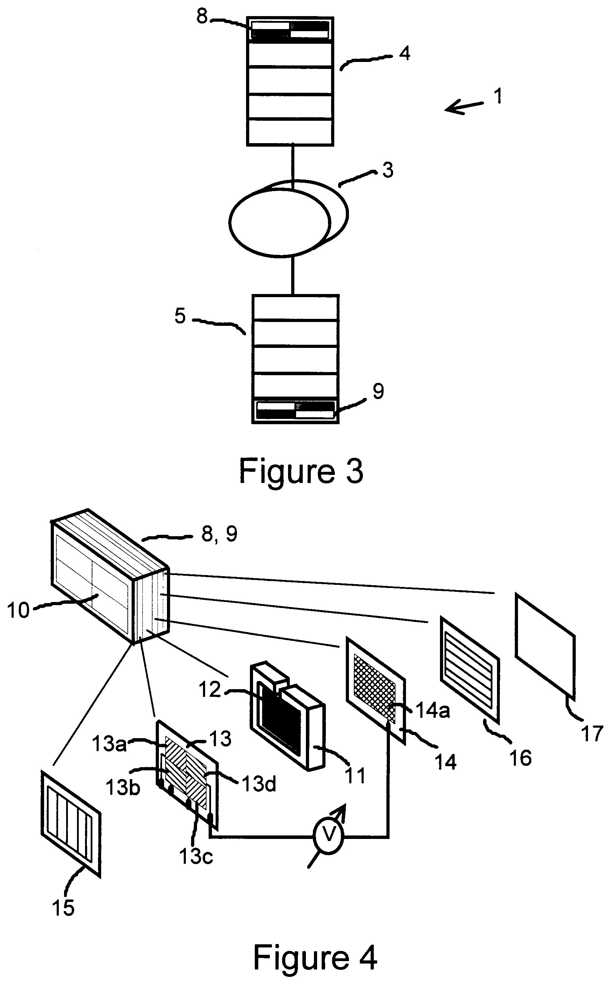

Referring to Figure 3, according to a first embodiment of the invention, the solar panels 4, 5 each have at their ends respective liquid crystal display panels (LCDs) 8, 9 which are shown in more detail in Figure 4. For ease of reference, the area of each LCD 8, 9 exposed to incoming radiation is referred to as the screen area 10, although this does not correspond to a separate physical element within the LCDs 8, 9. The LCDs 8, 9 may, for example, be conventional twisted nematic display devices with a cell 11 containing a nematic liquid crystal material 12, sandwiched between a front electrode plate 13 and a backplate 14. The front electrode plate 13 is a glass plate which includes an electrode arrangement comprising a transparent conducting layer divided into four segments 13a - 13d. The backplate 14 is a glass plate which is coated with an electrode in the form of a single transparent conducting layer 14a. Each segment 13a - d of the front plate 13 is selectively electrically controllable by applying a variable voltage V between the relevant segment 13a - d and the backplate electrode 14a. The electrode-cell-electrode 13, 11, 14 sandwich is further sandwiched between first and second polarisers 15, 16 and the entire arrangement is backed by a reflective plate 17.

The way in which a liquid crystal display produces bright and dark areas in response to an applied electric field is well known: reference is directed to L. Solymar and D. Walsh, "Lectures on the electrical properties of materials", 3rd Edition, Oxford Science Publications. Essentially, by applying a voltage V between a selected segment 13a - d and the backplate electrode 14a, the corresponding segment of the screen area 10 of each LCD 8, 9 will appear dark to incoming radiation, since incident light is not transmitted to the reflective plate 17. With no voltage applied, the segment will appear bright, since incident light is transmitted through the LCD 8, 9 and reflected back by the reflective plate 17. The voltage V can be varied to produce levels intermediate between dark and bright.

Any combination of segments can be activated, including all four segments 13a - 13d being simultaneously activated so that the entire screen area 10 can be turned from bright to dark or vice-versa. Figure 3 shows each LCD 8, 9 with voltages applied to segments 13b and 13d only. The selective activation of particular combinations of segments 13a - d allows roll, pitch and yaw movements to be achieved so as to control attitude, although such movements can also be achieved with fewer than four segments, depending on the arrangement of display panels around the satellite body. More complex control can be achieved if the number of segments comprising each display is increased.

In alternative embodiments, the front electrode plate 13 can be divided into fewer than four segments, down to one segment, so that the entire screen 10 is either dark or bright. It is also envisaged that the front electrode plate 13 may comprise irregular electrode arrangements corresponding to particular pre-determined control algorithms configured to perform desired or predicted attitude control adjustments.

The principles behind the use of LCDs for attitude control are as follows. When light strikes a surface, the respective amounts of absorption and reflection depend on the reflectivity of that surface, which is a property of the surface and is not dependent on the orientation of the surface with respect to the radiation source. The darker the surface, the greater the amount of absorption which occurs. The theoretical limit to this is the black body which completely absorbs all radiation falling on it. At the opposite end of the scale, a perfect reflector reflects all radiation incident on it, with no absorption. When light falls on a surface, it behaves as a stream of photons striking that surface and transfers momentum to it. The rate of transfer of momentum per unit area defines the force on that area, or pressure, which may be understood in the following terms.

When a photon with momentum $h\nu/c$ (h is Planck's constant, $\nu$ is frequency, c is the speed of light) strikes a black body, it is entirely absorbed and its momentum becomes zero. Assuming that n photons strike a unit area every second, the rate of transfer of momentum per unit area, or solar pressure, is $nh\nu/c$.

However, in the case of total reflection, the momentum of each photon after reflection is $-h\nu/c$, so that the solar pressure exerted on a perfect reflector is doubled to $2nh\nu/c$. The quantity $nh\nu$ is the total radiation energy striking unit area per second, and may be denoted Q.

This gives the expression:

solar pressure $P = Q/c$ for perfect absorption
$P = 2Q/c$ for perfect reflection

For example, it is known that the total solar radiation intensity (Q) striking 1 $m^2$ of the Earth's surface on a clear day is approximately $1.4 \times 10^3$ $Wm^{-2}$. This is equivalent to a solar pressure of $1.4 \times 10^3 / 3 \times 10^8 = 4.7 \times 10^{-6}$ $Nm^{-2}$ (assuming perfect absorption and that $c = 3 \times 10^8$ $ms^{-1}$). This is for most purposes an insignificant pressure on the Earth's surface. However, in space, where the radiation intensity is not reduced by atmospheric absorption, and where the lack of atmosphere means that atmospheric forces such as air resistance are irrelevant, solar pressure may be of comparable magnitude to the other forces to which a satellite is subject.

The mechanical flaps of the prior art devices have a fixed reflectivity and depend on the surface area exposed to solar radiation and on the angle of exposure to control the satellite. The operation of this invention relies on the variable reflectivity of a liquid crystal display panel. For a practical LCD panel, there will always be some absorption and some reflection, even when the screen area appears entirely bright or entirely dark, but the general principles hold true.

The amount of solar radiation being absorbed or reflected by each LCD 8, 9 is controlled electrically. When a segment of the screen 10 is darkened, more light will be absorbed by it and less force will be experienced by the segment. Likewise when the segment of the screen 10 is bright, more radiation will be reflected and a greater force will be experienced by it. The screen area 10 of the LCD required to produce significant and controllable torque effects depends on the size and characteristics of each individual satellite, including the control response time required. For example, different considerations apply to earth-orbiting satellites where fast accurate control may be required, as opposed to interplanetary probes, where there is much more time available to rotate the craft into the correct attitude for communications and/or measurements and where long term power resources are likely to be at a premium. In an earth-orbiting satellite, the magnitude of the solar pressure per 1$m^2$ of LCD screen surface is comparable to the intensity on 1$m^2$ of the Earth's surface, as disclosed above.

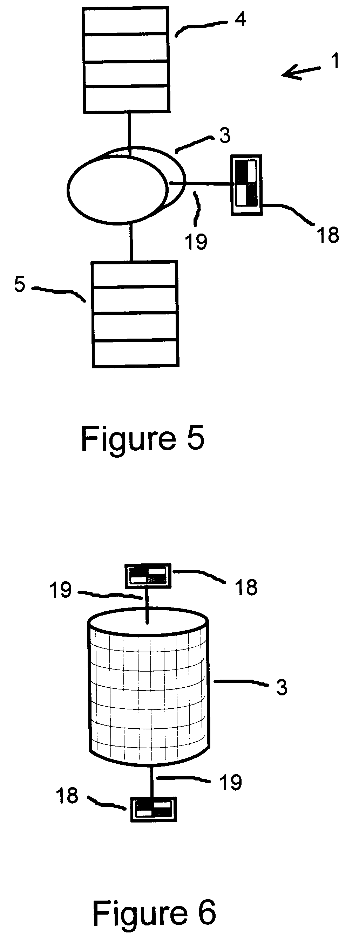

Referring to Figure 5, in a second embodiment of the invention, an LCD 18 is mounted on a boom 19 extending from the satellite body 3. The length of the boom determines the torque imparted to the satellite body. A similar arrangement can be used in a spin-stabilised satellite, as shown in Figure 6, in which an LCD 18 is mounted on a boom 19 projecting from each end of the cylindrical satellite body 3, so that the LCDs 18 do not spin with the body.

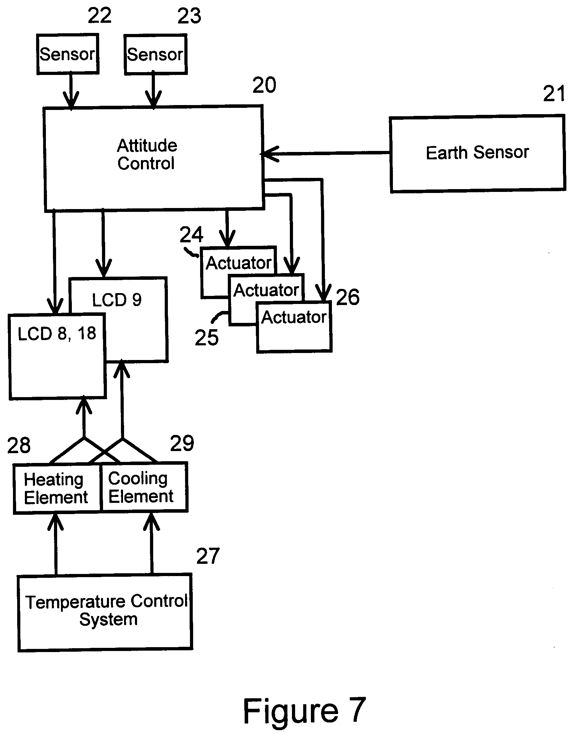

Referring to Figure 7, microprocessor based attitude control circuitry 20 within the satellite body 3 controls the signals to the LCDs 8, 9, 18, depending on an output from an attitude sensor, for example an earth sensor 21. The attitude control circuitry 20 receives inputs from other sensors 22, 23, for example, a radiation intensity sensor. It also outputs control signals to other actuators 24, 25, 26 such as reaction wheels. In this way, the LCDs may be used to maintain the position of, for example, an antenna pointing towards the earth. Because the switching time of the LCDs 8, 9, 18 is very much faster than comparable mechanical actuators, rapid and accurate attitude control may be achieved. In relation to the first embodiment, maintaining a fixed spatial relationship between each LCD 8, 9 and the satellite body 3 also eliminates one of the variables which complicates calculation in the conventional arrangement of Figure 1, namely the varying angle between a solar panel 4 and its corresponding flap 6.

It is known that LCD materials have a range of working temperatures, outside of which switching is slow or non-existent. While, in the vicinity of the earth and in sunlight, the temperature is adequate for the operation of at least some liquid crystal materials, when a spacecraft moves into shadow or travels to a position remote from the sun, the temperature can fall so low that operation of the LCDs 8, 9, 18 becomes impaired or impossible. Equally, when the spacecraft approaches close to the sun, the temperature can rise to a point where operation is again impossible.

To overcome this problem, a preferred embodiment of the present invention provides a temperature control system 27 for the LCD panels 8, 9, 18 to maintain the operating temperature of the liquid crystal material within the optimal range for that material.

For a spacecraft whose journey will take it to regions of high and low temperature, the temperature control system 27 can comprise both a heating element 28, for example a heating coil, and a cooling element 29, for example an efficient metallic radiative surface mounted to the rear of the LCD reflective backplate 17, so that, for example, this faces away from the sun when the LCD screen 10 faces towards the sun. Such a temperature control system 27 can be usefully employed in an earth-orbit satellite where alternate sun and earth shadow heating and cooling problems may arise. For a spacecraft intended solely to approach the sun, the temperature control system 27 can comprise cooling elements 29 only, whereas for a spacecraft intended to travel far from the sun, it can comprise only heating elements 28.

In a spacecraft employing large amounts of power, such as a communications satellite, measures have to be provided for the long term cooling of the satellite to dissipate excess thermal energy derived from its operation. In this case, the heating element 28 can be implemented by diverting a portion of the dissipated energy to the LCD panels 8, 9, 18. For example, referring to Figures 5 and 6, a convection based fluid system can be used, in which heat dissipated by the satellite is absorbed by a fluid circulating by convection in tubes running around the body 3, which continue through the boom 19, so as to deliver the absorbed heat to the LCD 18.

As an alternative to the use of LCD panels, the use of materials which change their optical properties, for example colour, in response to external stimuli such as electric current or heat, is also envisaged.

A surface with selectively variable reflectivity may also be used in the control of spacecraft propulsion, as in solar sail systems, which rely on the availability of super-light materials to create a relatively fragile sail structure, thus intrinsically excluding the use of mechanically based devices for this purpose.

## Claims

1. A spacecraft (1) having attitude control means comprising means for receiving solar radiation (8, 9, 18), the receiving means having a selectively variable reflectivity to incident radiation.

2. A spacecraft according to claim 1, wherein the radiation receiving means comprises an electro-optical device.

3. A spacecraft according to claim 2, wherein the electro-optical device comprises a liquid crystal display (8, 9, 18).

4. A spacecraft according to claim 3, wherein the display comprises a screen area (10) to be exposed to incident radiation.

5. A spacecraft according to claim 4, wherein the screen area (10) is divided into a plurality of segments (13a - d).

6. A spacecraft according to claim 5, wherein the reflectivity of each segment is separately controllable.

7. A spacecraft according to any preceding claim, including control means for varying the reflectivity of the radiation receiving means.

8. A spacecraft according to claim 7, wherein the control means is electrical.

9. A spacecraft according to any one of claims 3 to 8, when dependent on claim 3, comprising a body (3) and first and second solar panels (4, 5) mounted to the body, wherein the display (8) is mounted to the first solar panel (4).

10. A spacecraft according to claim 9, further comprising a second liquid crystal display (9) mounted to the second solar panel (5).

11. A spacecraft according to any one of claims 3 to 10, when dependent on claim 3, further comprising a temperature control system (27) for the or each liquid crystal display (8, 9, 18).

12. A spacecraft according to claim 11, wherein the temperature control system (27) includes means (30) for diverting thermal energy dissipated by the spacecraft to the or each liquid crystal display (8, 9, 18).

13. A spacecraft according to any one of the preceding claims, comprising an earth-orbiting satellite.

14. A spacecraft attitude control device for mounting to a spacecraft, comprising:

means for receiving solar radiation (8, 9, 18), said means having a selectively variable reflectivity to incident radiation; control means (20) responsive to signals from a spacecraft attitude sensor (21) for selectively varying the reflectivity of the radiation receiving means.

15. A method of controlling spacecraft attitude, comprising selectively varying the reflectivity of solar radiation receiving means mounted to the spacecraft.

ROLL

1

YAW

PITCH

2

## Figure 1

6

4

1

3

5

7

## Figure 2

Figure 3

Figure 4

Figure 5

Figure 6

Figure 7

European Patent
Office

**EUROPEAN SEARCH REPORT**

Application Number

EP 97 30 9482

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 668 212 A (HUGHES AIRCRAFT COMPANY) | 1-5, 7-10, 13-15 | B64G1/24 B64G1/44 |
| Y | * column 2, line 41 - column 3, line 37 * | 11,12 | |
| A | * column 4, line 3 - column 9, line 22; figures 1-4 * | 6 | |
| X | US 3 057 579 A (CUTLER) | 1,13-15 | |
| Y | * column 2, line 47 - column 4, line 6; figures 1,2 * | 11,12 | |
| A | | 2-10 | |
| X | US 5 305 971 A (DECANINI) | 1,13-15 | |
| A | * column 2, line 39 - column 5, line 16; figures 1-3 * | 2-12 | |
| A | DE 25 37 577 A (TRÜMPER) * page 5, line 16 - page 11, line 20; figures 1-5 * | 1,13-15 | |
| A | DE 31 46 701 A (LICENTIA PATENT-VERWALTUNGS-GMBH) * page 5, line 16 - page 7, line 21; figures 1-3 * | 3,4 | TECHNICAL FIELDS SEARCHED (Int.Cl.6) B64G G05D |

The present search report has been drawn up for all claims

| Place of search | Date of completion of the search | Examiner |
|---|---|---|
| THE HAGUE | 26 February 1998 | Rivero, C |

EPO FORM 1503 03 82 (P04C01)